# FASCICULE DE BREVET EUROPEEN

(11) **EP 4 396 045 B1**
(45) Date de publication et mention de la délivrance du brevet: **01.07.2026**
(21) Numéro de dépôt: 22769138.3
(22) Date de dépôt: 23.08.2022
(51) Int. Cl.: B60S 1/40, B60S 1/38

(54) **ADAPTATEUR D'UN SYSTÈME D'ESSUYAGE**
ADAPTER FÜR EIN WISCHSYSTEM
ADAPTER FOR A WIPING SYSTEM

(30) Priorité: 01.09.2021 FR 2109132
(43) Date de publication de la demande: 10.07.2024
(73) Titulaire: VALEO SYSTEMES D'ESSUYAGE, 78322 Le Mesnil Saint Denis (FR)
(72) Inventeur: HOUSSAT, Stephane, 78322 LE MESNIL SAINT DENIS (FR); GAUCHER, Vincent, 78322 LE MESNIL SAINT DENIS (FR); POTON, Eric, 78322 LE MESNIL SAINT DENIS (FR); JOMARD, Olivier, 78322 LE MESNIL SAINT DENIS (FR)
(74) Mandataire: Valeo Visibility
(86) Numéro de dépôt international: PCT/EP2022/073525
(87) Numéro de publication internationale: WO 2023/030980

(56) Documents cités:
- WO-A1-2020/212342
- WO-A1-2020/264586
- DE-A1- 102012 011 225
- FR-A1- 2 929 216

## Description

Le domaine de la présente invention est celui des systèmes d'essuyage destinés aux véhicules automobiles. Plus particulièrement, le domaine de la présente invention est celui des moyens de connexion mis en œuvre entre un bras d'essuie-glace et un balai d'essuyage d'un tel système d'essuyage.

Les véhicules automobiles sont couramment équipés de systèmes d'essuyage destinés à nettoyer leurs surfaces vitrées, et notamment leur pare-brise. De tels systèmes d'essuyage comprennent au moins un bras d'essuie-glace et un balai d'essuyage entraîné par le bras d'essuie-glace. Le bras d'essuie-glace est entraîné dans un mouvement de va et vient par l'intermédiaire d'un moteur électrique et le balai d'essuyage, rendu solidaire du bras d'essuie-glace, est amené à se déplacer en regard de la surface vitrée. Le balai d'essuyage comprend au moins une lame d'essuyage adaptée pour venir au contact de la surface vitrée à essuyer et pour racler et nettoyer la surface vitrée lors de son déplacement. Afin de pouvoir transmettre le mouvement du bras d'essuie-glace au balai d'essuyage, un adaptateur est agencé entre ces deux composants. Plus particulièrement, l'adaptateur est agencé entre le bras d'essuie-glace et un connecteur relié au balai d'essuyage.

Habituellement, l'adaptateur est solidaire du bras d'essuie-glace et plus particulièrement d'une chape du bras d'essuie-glace. Une telle coopération entre l'adaptateur et la chape est amovible, de telle sorte qu'elle permet de désolidariser l'adaptateur du bras pour changer le balai d'essuyage lorsque celui-ci est usé. Cependant, les moyens tels qu'ils viennent d'être décrits pour la coopération de l'adaptateur avec le bras, bien qu'ils soient efficaces, tendent à être améliorés et ne correspondent plus aux nouveaux standards développés. En effet, les adaptateurs proposés actuellement peuvent ne plus permettre la complémentarité de forme avec les bras d'essuyage nécessaire à la solida-risation évoquée lorsque les bras d'essuyage présentent de nouvelles structures et configurations, ces derniers pouvant notamment être dépourvus de chape. DE-A-10 2012 011 225 montre un adaptateur de l'état de la technique.

Dans ce contexte, l'invention porte sur un adaptateur pour la fixation d'un balai d'essuyage à un bras d'un système d'essuyage, l'adaptateur s'étendant selon une direction d'allongement principal longitudinale et étant configuré pour être monté sur un connecteur du balai d'essuyage, l'adaptateur comprenant au moins une base et un capot, la base comprenant au moins deux parois latérales opposées l'une de l'autre selon une direction transversale de l'adaptateur perpendiculaire à la direction longitudinale, les parois latérales étant reliées l'une à l'autre par une paroi supérieure, de telle sorte que lesdites parois latérales et la paroi supérieure forment un corps de la base qui délimite en partie un espace de réception pour le connecteur, la base étant configurée pour être montée pivotante autour d'un axe de rotation sur le connecteur, l'adaptateur étant caractérisé en ce que ladite base comprend une zone de réception du bras du système d'essuyage dans laquelle est formée au moins un logement délimité transversalement par une paroi de support et une paroi de maintien se rejoignant de telle sorte à former un logement, le capot étant mobile sur la base entre une position de dégagement dans laquelle l'accès à la zone de réception est dégagé et une position de verrouillage dans laquelle le capot recouvre la zone de réception, caractérisé en ce que le logement présente une section, dans un plan transversal perpendiculaire à la direction longitudinale, en forme de V.

Le balai d'essuyage et le bras font partie d'un système d'essuyage d'un véhicule destiné à nettoyer au moins en partie une surface vitrée dudit véhicule. L'adaptateur, qui s'étend suivant une direction d'allongement principal longitudinale sensiblement parallèle à l'axe principal d'allongement du balai d'essuyage, est destiné à être rendu solidaire du bras d'essuie-glace et à être montée pivotante par rapport au connecteur solidaire du balai d'essuyage, de telle sorte que le balai d'essuyage, et notamment une lame qu'il porte, puisse être entraîné par le mouvement du bras d'essuie-glace le long de la surface vitrée.

L'adaptateur comporte une base montée pivotante sur le balai, via le connecteur, et un capot monté mobile sur ladite base. Le capot de l'adaptateur permet de bloquer en position le bras sur la base, lorsque ce dernier est disposé dans la zone de réception de ladite base. Plus particulièrement, le capot est mobile entre la position de dégagement telle qu'évoquée, dans laquelle le bras peut être monté dans l'au moins un logement de la zone de réception, et la position de verrouillage dans laquelle le capot participe à bloquer le bras dans ledit logement.

Selon une caractéristique de l'invention, la paroi de support et la paroi de maintien de l'au moins un logement s'étendent suivant des plans principaux inclinés par rapport à un plan longitudinal et transversal L, T de l'adaptateur.

Selon une caractéristique de l'invention, les plans principaux de chacune des parois de support et des parois de maintien présentant un angle pouvant aller de 20° à 60° par rapport au plan longitudinal et transversal de l'adaptateur.

Selon une caractéristique de l'invention, ces parois s'écartent l'une de l'autre au fur et à mesure de l'éloignement de la paroi supérieure de la base de manière à former la section transversale en forme de V de l'au moins un logement.

Selon l'invention, le logement présente une section, dans un plan transversal perpendiculaire à la direction longitudinale, en forme de V,

Ainsi, l'invention couvre un mode de réalisation dans lequel l'adaptateur pour la fixation d'un balai d'essuyage à un bras d'un système d'essuyage, l'adaptateur s'étendant selon une direction d'allongement principal longitudinale et étant configuré pour être monté sur un connecteur du balai d'essuyage, l'adaptateur comprenant au moins une base et un capot, la base comprenant au moins deux parois latérales opposées l'une de l'autre selon une direction transversale de l'adaptateur perpendiculaire à la direction longitudinale, les parois latérales étant reliées l'une à l'autre par une paroi supérieure, de telle sorte que lesdites parois latérales et la paroi supérieure forment un corps de la base qui délimite en partie un espace de réception pour le connecteur, la base étant configurée pour être montée pivotante autour d'un axe de rotation sur le connecteur, l'adaptateur étant caractérisé en ce que ladite base comprend une zone de réception du bras du système d'essuyage dans laquelle est formée au moins un logement délimité transversalement par une paroi de support et une paroi de maintien se rejoignant de telle sorte à former un logement présentant une section, dans un plan transversal perpendiculaire à la direction longitudinale, en forme de V, l'adaptateur étant en outre caractérisé en ce que le capot est mobile sur la base entre une position de dégagement dans laquelle l'accès à la zone de réception est dégagé et une position de verrouillage dans laquelle le capot recouvre la zone de réception.

Selon une caractéristique de l'invention, la zone de réception du bras du système d'essuyage et l'espace de réception du connecteur sont disposés de part et d'autre de la paroi supérieure de la base. De manière plus précise, la base présente une forme en U et l'espace de réception du connecteur est alors formé à l'intérieur du U tandis que la zone de réception du bras est formée à l'extérieur du U. Le ou les logements présents dans la zone de réception sont notamment réalisés par des moyens qui forment saillie d'une face externe de la paroi supérieure, tournés à l'opposé de l'espace de réception du connecteur.

Selon une caractéristique de l'invention, la paroi de maintien de l'au moins un logement comprend un organe de positionnement configuré pour coopérer avec un élément de positionnement correspondant du bras du système d'essuyage.

Selon un premier exemple de l'invention, l'organe de positionnement peut être une gorge formée dans chacune des parois de maintien et apte à coopérer avec l'élément de positionnement du bras du système d'essuyage prenant ici la forme d'une saillie. Selon un deuxième exemple de l'invention, l'organe de positionnement peut être une saillie qui s'étend depuis la paroi de maintien de l'au moins un logement et qui est apte à coopérer avec l'élément de positionnement du bras du système d'essuyage, ici une gorge.

Selon une caractéristique de l'invention, la paroi de support de l'au moins un logement comprend un évidement, ouvert sur l'espace de réception du connecteur. En d'autres termes, l'évidement est réalisé dans la paroi de support pour permettre une communication, à travers la paroi supérieure de la base, entre l'espace de réception du connecteur et la zone de réception du bras.

Selon une caractéristique de l'invention, la zone de réception comprend deux logements séparés l'un de l'autre par une paroi centrale qui s'étend principalement suivant la direction longitudinale, chacun des logements étant configuré pour recevoir le bras du système d'essuyage, lesdits logements étant symétriques le long d'un plan principal de la paroi centrale, chaque logement comportant une paroi de support et une paroi de maintien s'étendant respectivement depuis la paroi centrale et l'une des parois latérales de la base.

Dans cette configuration, il est notable que la base présente une zone de réception du bras qui présente deux logements dans lesquels un bras d'essuie-glace peut venir se loger indifféremment. En d'autres termes, chacun des logements présente une configuration compatible à la structure du bras d'essuyage, ce dernier venant se loger dans l'un ou dans l'autre des logements en fonction du type de véhicule sur lequel le système d'essuyage est implanté, et notamment selon le fait que le véhicule soit conçu pour une conduite à gauche ou pour une conduite à droite.

Selon d'autres caractéristiques de l'invention, les organes de positionnement formés sur chacune des parois de maintien présentent une même forme et des mêmes dimensions de manière à coopérer avec le même élément de positionnement du bras du système d'essuyage, selon que le bras du système d'essuyage soit disposé dans tel ou tel logement de la zone de réception. Dans ce contexte, les organes de positionnement formés sur chacune des parois de maintien sont disposés longitudinalement sur leur paroi de maintien à une même position longitudinale, c'est-à-dire à une même distance par rapport à un référentiel commun que peut être une extrémité longitudinale de la base. En d'autres termes, l'organe de positionnement formé dans l'un des logements est une image miroir de l'organe de positionnement formé dans l'autre logement par rapport à la paroi centrale.

Selon une caractéristique de l'invention, la paroi centrale de la base forme un plan de symétrie de l'adaptateur.

Selon une caractéristique de l'invention, l'adaptateur comporte des moyens de coopération de la base avec le capot. Ces moyens de coopération sont notamment configurés pour assurer le centrage transversal du capot par rapport à la base dans la position de verrouillage.

Selon une caractéristique de l'invention, les moyens de coopération comportent au moins deux surépaisseurs qui s'étendent chacune longitudinalement le long de la paroi centrale et de part et d'autre de celle-ci et qui forment une butée au mouvement de rotation du capot.

Selon une caractéristique de l'invention, les moyens de coopération comprennent au moins une rainure formée sur le capot et apte à coopérer avec une arête longitudinale de la paroi centrale. Les surépaisseurs précédemment évoquées forment saillie à la base de l'arête longitudinale, de sorte que les surépaisseurs forment une butée à l'enfoncement de cette arête longitudinale dans la rainure formée sur le capot.

Selon une caractéristique de l'invention, le capot comprend une pluralité de nervures disposées les unes après les autres le long de la direction longitudinale, chaque nervure étant formée perpendiculairement à cette direction longitudinale et présentant chacune une tranchée, l'alignement des tranchées le long de la direction longitudinale formant la rainure. On comprend alors que les nervures sont disposées en butée contre les surépaisseurs de la paroi centrale de la base tandis que la rainure coopère avec l'arête longitudinale de la paroi centrale.

Selon une caractéristique de l'invention, le capot comprend au moins un rail d'appui qui s'étend longitudinalement et qui est configuré pour venir en recouvrement de l'au moins un logement de la zone de réception. Le rail d'appui participe notamment au maintien du bras du système d'essuyage dans le logement de la zone de réception dans lequel le bras doit être positionné. Le rail d'appui participe notamment à fermer au moins partiellement le logement suivant la direction verticale et à emprisonner le bras au sein du logement. Le rail d'appui est notamment configuré pour être, dans la position de verrouillage du capot, au contact du bras et l'empêcher de bouger au sein du logement correspondant.

Plus particulièrement, le capot comprend au moins deux rails d'appui qui s'étendent symétriquement l'un par rapport à l'autre par rapport à un plan longitudinal médian du capot, de sorte que l'un ou l'autre des rails d'appui est opérationnel, c'est-à-dire au contact du bras lorsque le capot est dans la position de verrouillage, en fonction du logement dans lequel le bras est disposé.

Selon une caractéristique de l'invention, le capot est monté rotatif sur la base au moyen d'un dispositif de rotation de l'adaptateur formé sur la base et le capot. Le capot est monté rotatif sur la base de telle sorte que dans la position de dégagement du capot, ce dernier est majoritairement éloigné de la base, seule la zone de pivotement du capot étant au contact de la base, tandis que dans la position de verrouillage du capot, ledit capot s'étend en recouvrement, au moins de la zone de réception de la base.

Selon une caractéristique de l'invention, le dispositif de rotation comprend au moins un orifice formé sur l'une des parois latérales de la base à l'opposé de l'espace de réception du connecteur et au moins un ergot cylindrique formé sur le capot, et apte à coopérer avec l'orifice.

On comprend par ailleurs que l'invention couvre également un mode de réalisation dans lequel le dispositif de rotation est tel que l'orifice est formé sur le capot et l'ergot cylindrique est formé sur l'une des parois latérales de la base, à l'opposé de l'espace de réception du connecteur.

Selon une caractéristique de l'invention, l'au moins un dispositif de rotation est formé longitudinalement à l'opposé de la zone de réception du bras du système d'essuyage.

Plus particulièrement, en considérant la base seule, le logement circulaire ou le plot cylindrique formant l'au moins un dispositif de rotation est formé à l'opposé de la zone de réception en considérant la direction longitudinale.

Selon une caractéristique de l'invention, l'adaptateur comprend au moins un moyen de blocage en position du capot sur la base dans ladite position de verrouillage, le moyen de blocage en position comprenant au moins un plot latéral formé sur une face externe d'une des parois latérales de la base et un dispositif de blocage formé sur le capot et apte à coopérer avec le plot latéral.

Selon une caractéristique de l'invention, la base comprend au moins un organe de butée de la rotation du capot sur la base, formé sur une face externe d'une des parois latérales de la base, l'organe de butée étant apte à entrer en contact avec un bord d'extrémité du capot pour former une butée.

Selon une caractéristique de l'invention, le plot latéral est agencé au voisinage de la paroi supérieure et l'organe de butée est agencé au voisinage d'une arête d'extrémité libre de la paroi latérale, à l'opposé de la paroi supérieure. On comprend qu'ainsi, le plot latéral et l'organe de butée sont disposés à l'opposé l'un de l'autre suivant une direction verticale de l'adaptateur, perpendiculaire à la direction longitudinale et transversale.

Selon une caractéristique de l'invention, le plot latéral et/ou l'organe de butée sont formés longitudinalement à l'opposé du dispositif de rotation.

Selon une caractéristique de l'invention, la paroi centrale comprend au moins une extrémité biseautée.

Selon une caractéristique de l'invention, le capot comprend une languette de verrouillage qui s'étend suivant la direction longitudinale et qui est disposée au contact d'une extrémité de la paroi centrale, opposée à l'extrémité biseautée. En d'autres termes, dans un contexte de capot mobile en rotation par rapport à la base, la languette de verrouillage forme une butée longitudinale du capot par rapport à la paroi centrale participant au blocage en position du capot sur la base suivant la direction longitudinale.

Selon une alternative de l'invention, le capot est configuré pour être mobile en translation longitudinale sur la base.

Selon l'alternative de l'invention, l'adaptateur comprend au moins un moyen d'arrêt en translation du capot dans sa position de verrouillage sur la base.

Selon l'alternative de l'invention, l'au moins un moyen d'arrêt en translation est formé sur la base à l'opposé de la zone de réception suivant la direction longitudinale.

Selon l'alternative de l'invention, l'au moins un moyen d'arrêt en translation consiste en au moins une languette élastique formée sur la base et apte à coopérer avec une fenêtre de réception formée sur le capot.

Selon une autre alternative de l'invention, l'au moins un moyen d'arrêt consiste en au moins une languette de maintien longitudinale formée sur le capot et apte à coopérer avec une traverse longitudinale formée sur la base.

Selon l'alternative de l'invention, la rainure est réalisée par une glissière formée sur le capot et apte à coopérer avec la paroi centrale de la base, ladite glissière présentant une extrémité libre ouverte pour l'insertion de la paroi centrale et une extrémité opposée formant un organe de butée de la paroi centrale dans la glissière.

Selon l'alternative de l'invention, le capot comprend au moins un rail de guidage qui s'étend longitudinalement le long du capot, le rail de guidage étant apte à coopérer avec un rail complémentaire formé sur la base.

Selon l'alternative de l'invention, le capot comprend au moins un organe de butée en translation apte à coopérer avec un épaulement formé sur la base.

L'invention porte également sur un balai d'essuyage comprenant au moins une lame d'essuyage, un connecteur et un adaptateur selon l'une quelconque des caractéristiques précédentes, l'adaptateur étant monté pivotant par rapport au connecteur rendu solidaire d'un support de la lame d'essuyage.

L'invention a également pour objet un système d'essuyage pour véhicule automobile, qui comprend un balai d'essuyage selon la caractéristique précédente et un bras relié au balai d'essuyage par l'intermédiaire de l'adaptateur, ledit bras étant disposé dans la zone de réception de l'adaptateur.

D'autres caractéristiques, détails et avantages de l'invention ressortiront plus clairement à la lecture de la description donnée ci-après à titre indicatif en relation avec des dessins dans lesquels :
[Fig.1] est une vue générale en perspective d'un système d'essuyage selon l'invention, comprenant au moins un balai d'essuyage, un bras et un adaptateur ;
[Fig.2] est une vue rapprochée du système d'essuyage de la [Fig.1] rendant plus particulièrement visible la coopération de l'adaptateur et du connecteur, ici selon un premier mode de réalisation de l'invention ;
[Fig.3] est une vue en éclatée en perspective de l'adaptateur et du connecteur visibles sur la [Fig.2], rendant notamment visible le fait que l'adaptateur comprend une base et un capot ;
[Fig.4] est une vue en perspective de la base de l'adaptateur tel que visible sur la [Fig.3], la base étant vue de dessous pour montrer un espace de réception du connecteur ;
[Fig.5] est une vue en perspective de la base de l'adaptateur de la [Fig.3], en vue de dessus pour rendre visible une zone de réception du bras du système d'essuyage, la zone de réception comprenant deux logements symétriques ;
[Fig.6] est une vue de coté de la base de l'adaptateur de la [Fig.3] montrant une partie d'un dispositif de rotation du capot sur la base ainsi qu'un dispositif de blocage ;
[Fig.7] est une vue en perspective du capot de l'adaptateur, vue de dessous, montrant une partie du dispositif de rotation du capot sur la base et un moyen de coopération du capot avec la base ;
[Fig.8] est une vue en coupe transversale de l'adaptateur selon le premier mode de réalisation montrant la coopération entre la base et le capot une fois le capot dans une position de verrouillage après rotation par rapport à la base ;
[Fig.9] est une vue en perspective similaire à celle de la [Fig.2], rendant visible un adaptateur selon un deuxième mode de réalisation de l'invention ;
[Fig.10] est une vue en perspective, vue de dessus, de la base de l'adaptateur de la [Fig.9] ;
[Fig.11] est une vue en perspective, vue de dessous, du capot de l'adaptateur de la [Fig.9] ;
[Fig.12] est une autre vue en perspective, vue de dessous, du capot de l'adaptateur de la [Fig.9], avec un angle de perspective permettant de rendre plus visible un rail de guidage ;
[Fig.13] est une vue en perspective, de coté, de la base de la [Fig.10], avec un angle de perspective rendant notamment visible un rail complémentaire ;
[Fig.14] est une vue en perspective du capot de l'adaptateur selon un troisième mode de réalisation de l'invention ;
[Fig.15] est une vue en perspective de la base de l'adaptateur selon le troisième mode de réalisation de l'invention.

Il faut tout d'abord noter que si les figures exposent l'invention de manière détaillée pour sa mise en œuvre, ces figures peuvent bien entendu servir à mieux définir l'invention, le cas échéant. Il est également à noter que ces figures n'exposent que des exemples de réalisation de l'invention. Enfin, les mêmes repères désignent les mêmes éléments dans l'ensemble des figures.

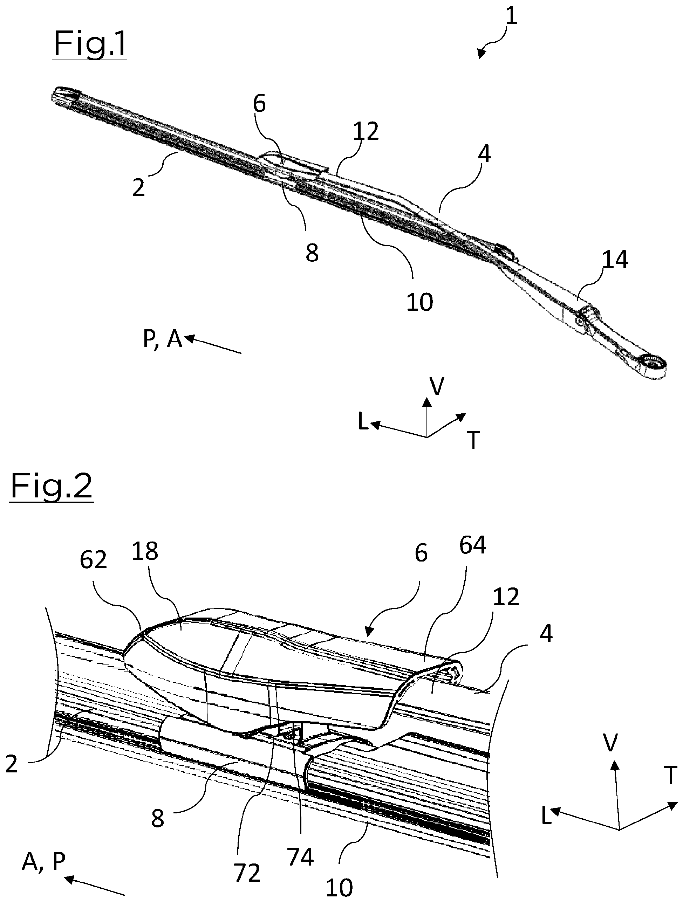

Les figures 1 et 2 illustrent un système d'essuyage 1 selon l'invention. Tel que représenté, ce système d'essuyage 1 comprend au moins un balai d'essuyage 2 et au moins un bras 4 reliés l'un à l'autre par au moins un adaptateur 6 selon l'invention. De manière plus précise, l'adaptateur 6 permet de relier un connecteur 8, visible à la [Fig.2] et solidaire du balai d'essuyage 2, au bras 4 d'essuie-glace.

Le balai d'essuyage 2 comporte au moins une lame 10 qui est destinée à venir au contact d'une surface vitrée d'un véhicule équipé du système d'essuyage 1. Sans que cela soit limitatif de l'invention, le balai d'essuyage 2 peut comprendre au moins un support de lame, qui peut par ailleurs être équipé d'organe de rigidification et/ou d'un élément de déflexion d'air.

Le bras 4 d'essuie-glace est configuré pour entrainer en rotation le balai d'essuyage 2. Ainsi, le bras 4 comprend au moins une première extrémité 12 solidarisée à l'adaptateur 6 et une deuxième extrémité 14 opposée à la première extrémité 12 selon une direction d'allongement principal P du bras 4, la deuxième extrémité 14 étant solidaire d'un moteur d'entrainement, non visible, logé au sein du véhicule automobile.

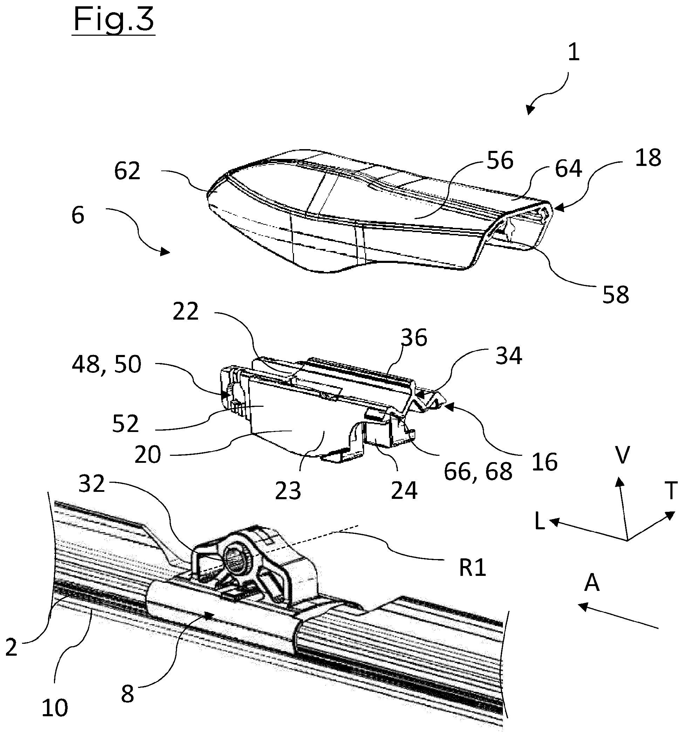

L'adaptateur 6, plus particulièrement visible aux figures 2 et 3, s'étend selon une direction d'allongement principal A sensiblement parallèle à la direction d'allongement principal P du bras 4 et à une direction longitudinale L. L'adaptateur comprend au moins une base 16 et un capot 18.

La base 16 de l'adaptateur 6, visible notamment sur les figures 3 à 6, comprend au moins deux parois latérales 20 respectivement disposées à une extrémité transversale de la base, en référence à une direction transversale T de l'adaptateur 6, perpendiculaire à la direction longitudinale L. Chaque paroi latérale 20 s'étend dans un plan longitudinal et vertical L, V, en référence au trièdre longitudinal, vertical, transversal L, V, T illustré sur chacune des figures, la direction verticale V étant perpendiculaire aux directions longitudinale L et transversale T.

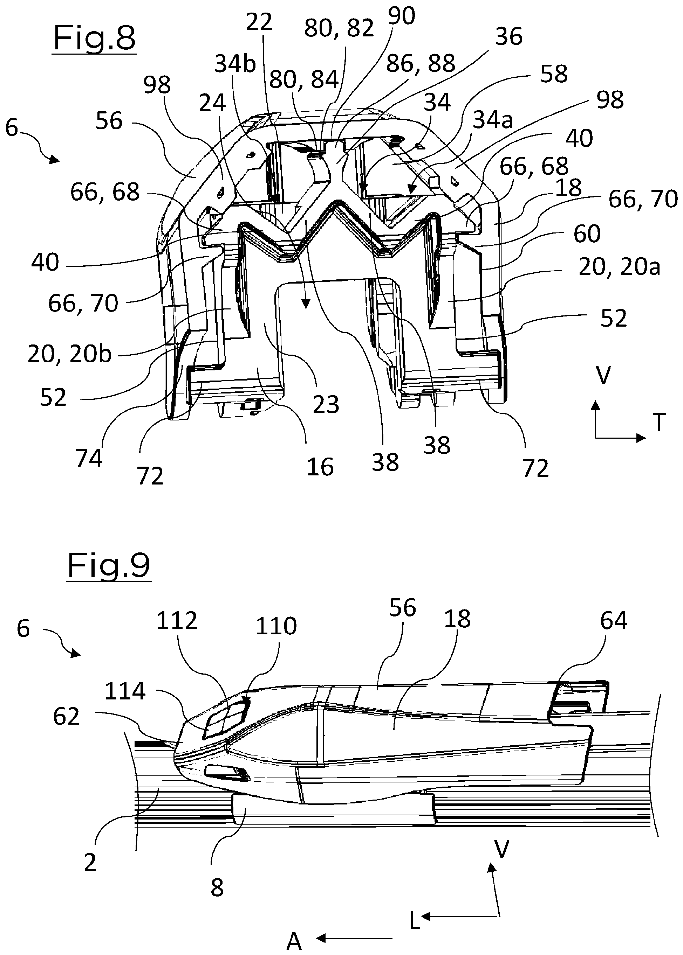

La base 16 comprend également au moins une paroi supérieure 22 qui s'étend principalement dans un plan longitudinal et transversal L, T de l'adaptateur 6 et de telle sorte que ladite paroi supérieure 22 relie les parois latérales 20 de l'adaptateur l'une à l'autre. Le corps 23 de la base 16 ainsi formé avec les parois latérales et la paroi supérieure présente une section, dans un plan transversal et vertical T, V, qui est en forme de U, tel que cela est notamment visible à la [Fig.8]. Les faces internes des parois latérales 20 et de la paroi supérieure 22 délimitent alors au moins en partie un espace de réception 24 du connecteur 8.

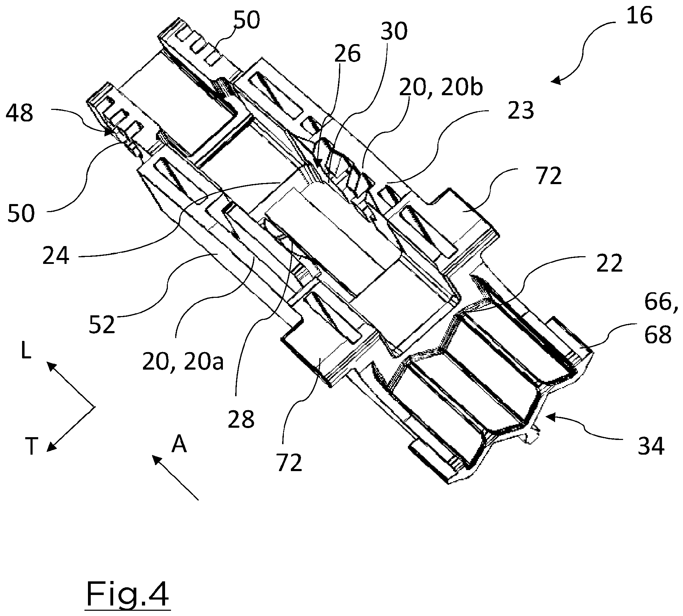

La base 16 est configurée pour être montée pivotante autour d'un premier axe de rotation R1 sur le connecteur 8 du balai d'essuyage 2, le premier axe de rotation R1, visible à la [Fig.3], étant parallèle à la direction transversale T de l'adaptateur 6. A cette fin, la base 16 comprend des moyens de rotation 26 de la base 16 par rapport au connecteur 8, visible à la [Fig.4], au moins en partie formés sur les parois latérales 20 de la base 16 et qui sont configurés pour coopérer avec des éléments de rotation complémentaires 32 formés sur le connecteur 8 et en partie visibles à la [Fig.3].

Dans l'exemple illustré, les éléments de rotation complémentaires 32 sont formés par des alésages ménagés transversalement sur chaque face latérale du connecteur 8 et les moyens de rotation 26 sont formés notamment par un plot cylindrique 28, formé dans une languette élastique en regard d'une première paroi latérale 20a et apte à coopérer avec un des alésages du connecteur, et un palier formé dans la deuxième paroi latérale 20b et apte à coopérer avec l'autre alésage. Le palier 30 et le plot cylindrique 28 sont alignés transversalement et participent à former, avec les alésages du connecteur, le premier axe de rotation.

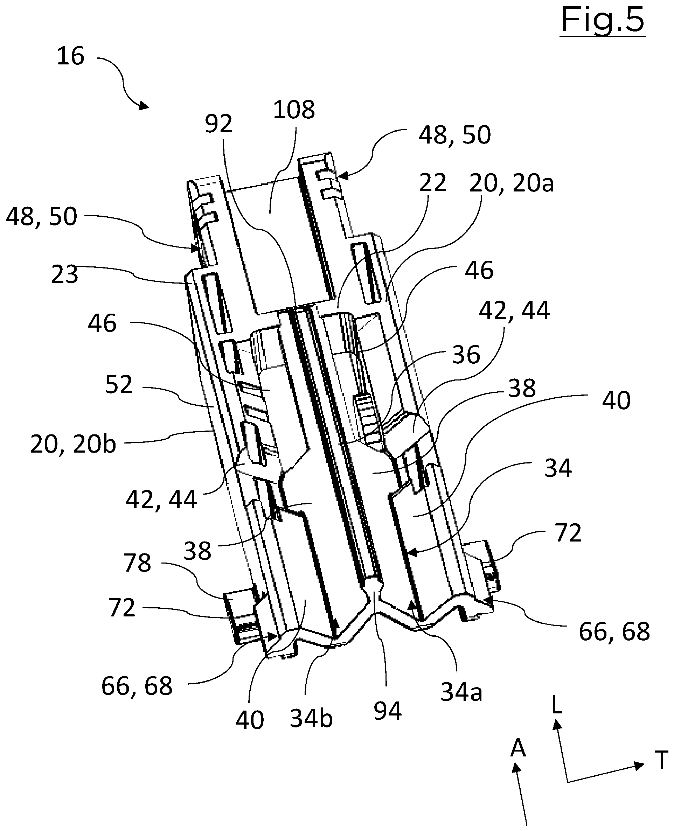

Tel que cela est particulièrement visible à la [Fig.5], la base 16 comprend au moins une zone de réception 34 du bras du système d'essuyage dans laquelle est formée au moins un logement 34a, 34b. Selon une caractéristique non limitative de l'invention, une paroi de fond du logement présente un profil en V dans un plan de section perpendiculaire à la direction d'allongement longitudinal, cette paroi de fond au profil en V étant formée par une paroi de support 38 et une paroi de maintien 40.

Dans l'exemple plus particulièrement illustré sur les figures, la zone de réception 34 comprend deux logements 34a, 34b séparés l'un de l'autre pas une paroi centrale 36 qui s'étend principalement suivant la direction longitudinale L, mais il convient de noter que la zone de réception pourrait présenter un nombre différent de logements, et notamment un unique logement dès lors que ce logement est délimité transversalement par une paroi de support 38 et une paroi de maintien 40 conformément à ce qui vient d'être décrit, avec notamment une section du logement présentant une forme de V.

Dans ce qui va suivre, on va plus particulièrement décrire l'adaptateur avec deux logements et les caractéristiques propres à un logement pourront être appliquées à un adaptateur comprenant une zone de réception à un seul logement.

Dans l'exemple illustré, chacun des logements 34a, 34b est configuré pour recevoir le bras du système d'essuyage, qui en fonction du véhicule sur lequel le système d'essuyage est appliqué, et notamment en fonction d'une conduite à gauche ou à droite, peut être disposé indifféremment dans l'un ou dans l'autre de ces logements.

Tel que cela est visible sur les figures, la zone de réception est plus particulièrement configurée pour que les deux logements soient identiques de part et d'autre de la paroi centrale 36, chaque logement formant une image miroir de l'autre logement par rapport à la paroi centrale. En d'autres termes, les deux logements 34a, 34b de la zone de réception 34 sont symétriques par rapport à un plan de symétrie formé par un plan principal longitudinal et vertical L, V de la paroi centrale 36.

La zone de réception 34 du bras est formée sur la paroi supérieure 22 de la base 16 de telle sorte que la zone de réception 34 du bras du système d'essuyage et l'espace de réception du connecteur soient disposés de part et d'autre de la paroi supérieure 22 de la base 16. En d'autres termes et tel que visible à la [Fig.8], l'espace de réception 24 est formé à l'intérieur de la section en U de la base 16 et la zone de réception 34 est formée à l'extérieur de cette section en U. On comprend alors que la zone de réception 34 est tournée à l'opposé du connecteur lorsque la base 16 de l'adaptateur 6 est montée sur ce dernier.

Chacun des logements 34a, 34b de la zone de réception 34 est délimité transversalement par la paroi centrale 36 et l'une des parois latérales 20 de la base 16. Tel que cela a pu être évoqué précédemment, une paroi de fond de chaque logement, s'étendant entre la paroi centrale et la paroi latérale correspondante, présente un profil en V dans un plan de section perpendiculaire à la direction d'allongement longitudinal, cette paroi de fond au profil en V étant formée par une paroi de support 38 et une paroi de maintien 40 qui s'étendent respectivement depuis la paroi centrale 36 et l'une des parois latérales 20 de la base 16. Pour chaque logement, la paroi de support 38 et la paroi de maintien 40 présentent un profil incliné par rapport au plan principal longitudinal et vertical L, V de la paroi centrale 36 et se rejoignent sensiblement au centre du logement selon la direction transversale. L'inclinaison de chacune des parois de maintien 40 et des parois de support 38 de chacun des logements 34a, 34b peut par exemple être de 40° par rapport au plan principal longitudinal et vertical L, V de la paroi centrale 36.

Une fois en position dans l'un des logements, le bras du système d'essuyage est à la fois en appui contre la paroi de support 38 de ce logement et contre la paroi de maintien 40, en prenant une position inclinée par rapport au plan principal longitudinal et vertical L, V de la paroi centrale 36, chacune des parois participant à maintenir le bras dans le logement.

Tel que cela est visible à la [Fig.5], la paroi de maintien 40 de chacun des logements 34a, 34b comprend un organe de positionnement 42 configuré pour coopérer avec un élément de positionnement correspondant du bras du système d'essuyage, non visible. Dans l'exemple de la [Fig.5], l'organe de positionnement 42 de chacune des parois de maintien 40 se présente sous la forme d'une gorge 44 réalisée dans l'épaisseur de la paroi de maintien 40. Plus particulièrement, la gorge 44 de chacun des logements 34a, 34b est disposée symétriquement de l'autre gorge par rapport au plan principal L, T de la paroi centrale 36. On comprend ici que la gorge 44 de chacun des logements 34a, 34b est configurée pour coopérer avec une saillie du bras du système d'essuyage, non visible, de telle sorte à bloquer en position le bras par rapport à la base 16 suivant la direction longitudinale L.

La paroi de support 38 de chacun des logements 34a, 34b présente par ailleurs un évidement 46, qui traverse la paroi supérieure de la base de manière à être ouvert sur l'espace de réception 24 du connecteur. De manière plus précise, l'évidement 46 est formé en regard du moyen de rotation 26 de la base 16 sur le connecteur suivant la direction verticale V, de manière à laisser un dégagement pour autoriser le mouvement de rotation de l'adaptateur 6 sur le connecteur.

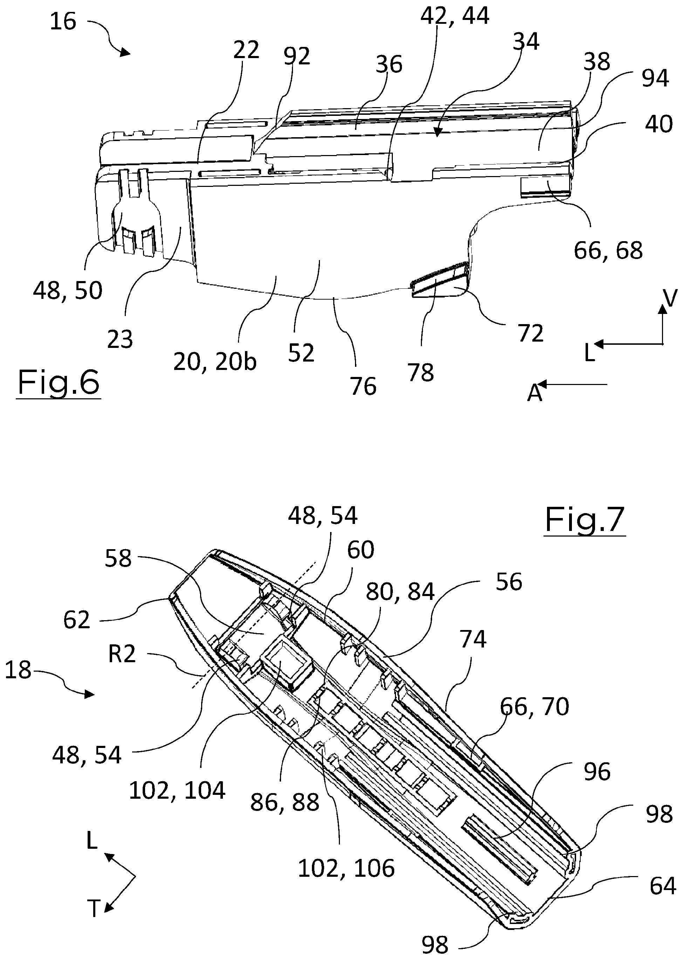

Selon l'invention, le capot 18 de l'adaptateur 6, visible figures 7 et 8, est mobile sur la base 16 entre une position de dégagement, dans laquelle les logements sont découverts et le bras peut être monté dans l'un des logements de la base, et une position de verrouillage dans laquelle le capot recouvre les logements de sorte que le capot 18 participe à bloquer le bras dans l'un desdits logements.

Dans le premier mode de réalisation, le capot 18 est monté rotatif sur la base 16 au moyen d'un dispositif de rotation 48 formé sur la base 16 et sur le capot 18. Le dispositif de rotation 48 comprend ici au moins un logement circulaire 50, visible à la [Fig.6], formé sur l'une des faces externes 52 d'une des parois latérales 20 de la base 16 et au moins un ergot cylindrique 54, visible à la [Fig.7], formé sur le capot 18 et dimensionné pour coopérer, par complémentarité de formes, avec le logement circulaire 50 de la base 16. Il convient de noter que sans sortir du contexte de l'invention, les éléments mâles formés par le ou les ergots cylindriques et les éléments femelles formés par le ou les logements circulaires pourraient être intervertis et disposés respectivement sur la base et le capot.

Le dispositif de rotation 48 est formé sur l'adaptateur au voisinage d'une extrémité longitudinale à l'opposé de la zone de réception 34 du bras. Plus particulièrement, en se référant à la base, les logements circulaires 50 du dispositif de rotation sont formés sur chacune des parois latérales 20 de la base 16, de telle sorte qu'ils soient longitudinalement à l'opposé de la zone de réception 34 du bras du système d'essuyage.

Le capot 18 présente une coque 56 qui délimite un espace interne 58 apte à loger la base 16 de l'adaptateur 6 lorsque le capot est dans la position de verrouillage. L'ergot cylindrique 54 est disposé dans l'espace interne 58 du capot 18.

Selon l'exemple de l'invention, chacune des parois latérales 20 de la base 16 comprend le logement circulaire 50 formé sur sa face externe 52, et le capot 18 comprend deux ergots cylindriques 54 formés chacun dans l'espace interne sur une face interne 60 de la coque 56 à l'opposé l'un de l'autre suivant la direction transversale T, et de telle sorte qu'ils soient aptes à coopérer avec les logements circulaires 50 formés sur chacune des parois latérales 20 de la base 16.

On comprend de ce qui précède, que le dispositif de rotation 48 du capot 18 sur la base 16 assure la mobilité du capot 18 sur la base 16 selon un deuxième axe de rotation R2, parallèle au premier axe de rotation de la base 16 sur le connecteur 8 et visible à la [Fig.7]. Un tel deuxième axe de rotation R2 assure donc la mobilité du capot 18 sur la base 16 depuis la position de dégagement dans laquelle le capot 18 est à distance de la base 16 et une position de verrouillage dans laquelle le capot 18 s'étend en recouvrement au moins partiel de la base 16 de l'adaptateur 6. De manière plus précise, on définit une première extrémité longitudinale 62 du capot 18 au niveau de laquelle sont formés les ergots cylindriques 54 et une deuxième extrémité longitudinale 64 du capot 18, opposée à la première extrémité longitudinale 62 selon la direction longitudinale L de l'adaptateur 6. Ainsi, on comprend que le capot 18 est mobile en rotation sur la base 16 au niveau de sa première extrémité longitudinale 62 entre sa position de dégagement dans laquelle sa deuxième extrémité longitudinale 64 est éloignée verticalement de la base 16, et sa position de verrouillage dans laquelle sa deuxième extrémité longitudinale 64 est la plus proche de la base 16.

Afin d'assurer le blocage en position du capot 18 sur la base 16 dans sa position de verrouillage, l'adaptateur 6 comprend au moins un moyen de blocage en position 66 formé par des composants du capot et de la base. Dans le premier mode de réalisation, ce moyen de blocage en position 66 comprend au moins un plot latéral 68 formé sur la face externe 52 d'une des parois latérales 20 de la base 16 et un dispositif de blocage 70 formé sur le capot 18 et apte à coopérer avec le plot latéral 68, tel que cela est notamment visible sur les figures 6 et 7. Le plot latéral 68 est formé sur la base 16 à l'opposé du logement circulaire 50 selon la direction longitudinale L de l'adaptateur 6 et au niveau de la paroi supérieure 22 de la base 16. Sans que cela soit limitatif de ce mode de réalisation, chacune des parois latérales 20a, 20b de la base 16 peut comprendre un tel plot latéral 68 formé sur sa face externe 52.

De manière complémentaire, le capot 18 comprend deux dispositifs de blocage 70, chacun étant apte à coopérer avec l'un des plots latéraux 68 de la base 16. De manière plus précise, les dispositifs de blocage 70 consistent en une nervure formant saillie de la coque 56, de manière à s'étendre dans l'espace interne 58 du capot. Le mouvement de rotation du capot 18 vers sa position de verrouillage mettant en contact ces dispositifs de blocage avec les plots latéraux 68 de la base 16, le moyen de blocage en position 66 est configuré pour fonctionner par encliquetage par déformation élastique. Plus particulièrement, les dispositifs de fixation 70 et les plots latéraux 68 présentent des plans inclinés qui favorisent l'écartement des parois de la coque du capot pour que les dispositifs de fixation aillent au-delà des plots latéraux et se verrouillent derrière les plots latéraux une fois que les parois de la coque ont repris leur position d'origine.

Toujours selon l'exemple de l'invention de la [Fig.6], la base 16 comprend au moins un organe de butée 72 du capot 18 sur la base 16. L'au moins un organe de butée 72 est formé sur la face externe 52 de l'une des parois latérales 20 de la base, de manière à coopérer avec un bord d'extrémité 74 du capot 18. Plus particulièrement, l'organe de butée 72 est agencé au voisinage d'une arête d'extrémité libre 76 de la paroi latérale 20. L'organe de butée 72 présente ici une forme de rampe avec une surface de réception 78 qui s'étend dans un plan incliné par rapport à un plan longitudinal et transversal, assurant ainsi une complémentarité de forme avec le bord d'extrémité 74 du capot 18. Tel que cela est particulièrement visible à la [Fig.6], l'organe de butée 72 peut notamment être disposé à l'opposé du logement circulaire 50 de la base 16, selon la direction longitudinale L. Et la base 16 comprend avantageusement deux organes de butée 72 disposés sur la face externe 52 de la première paroi latérale 20a et de la deuxième paroi latérale 20b.

L'organe de butée 72 assure le blocage de la rotation du capot 18 sur la base 16 dans le sens de rotation allant de la position de dégagement à la position de verrouillage, et le moyen de blocage en position 66 permet d'assurer le maintien en position de verrouillage en bloquant le mouvement du capot 70 dans le sens de rotation allant de la position de verrouillage à la position de dégagement.

Tel que cela est visible à la [Fig.8], l'adaptateur 6 comprend des moyens de coopération 80 de la base 16 avec le capot 18, qui sont notamment configurés pour permettre le centrage transversal du capot sur la base en fin de rotation. Dans le premier mode de réalisation, les moyens de coopération 80 du capot 18 comprennent une pluralité de nervures 84, visibles à la [Fig.7], disposées parallèlement les unes aux autres, selon une orientation transversale perpendiculaire à la direction d'allongement principale de l'adaptateur. Ces nervures sont notamment particulières en ce qu'une tranchée 86 est formée dans chaque nervure 84, ces tranchées 86 étant alignées le long d'une droite parallèle à la direction longitudinale L de telle sorte à former une rainure 88. La rainure 88 du capot 18 est alors apte à coopérer avec une arête longitudinale 90 de la paroi centrale 36 tel que visible à la [Fig.8].

Les moyens de coopération 80 peuvent comprendre également au moins une surépaisseur 82 qui s'étend longitudinalement le long de la paroi centrale 36, de manière à former une butée à la rotation du capot 18, par contact entre cette surépaisseur 82 et les parois des nervures délimitant la rainure 88 du capot.

Dans le premier mode de réalisation, tel qu'illustré sur la [Fig.6], la paroi centrale 36 de la base 16 peut comprendre une extrémité biseautée, de telle sorte à faciliter la rotation du capot 18 sur la base 16 lors du montage du système d'essuyage.

Notamment, cette extrémité biseautée permet un accostage progressif et facilité du capot 18 lors de sa fermeture sur sa base 16. Une telle forme biseautée permet aussi un centrage de la tranchée 86 des nervures 84 du capot 18 sur l'arête longitudinale 90 de la paroi centrale 36.

De manière plus précise, on définit une extrémité interne 92 de la paroi centrale 36 et une extrémité externe 94 de la paroi centrale 36 opposées l'une de l'autre suivant la direction longitudinale L de l'adaptateur 6, l'extrémité interne 92 étant tournée vers l'extrémité de la base 16 comprenant le logement circulaire 50 et l'extrémité externe 94 étant opposée à l'extrémité interne 92 selon la direction longitudinale L. Ainsi, dans l'exemple de l'invention de la [Fig.6], l'extrémité biseautée est formée au niveau de l'extrémité interne 92 de la paroi centrale 36.

Tel que cela est visible à la [Fig.7], le capot 18 comprend au moins une languette de verrouillage 96 qui s'étend suivant la direction longitudinale L et qui est destinée à être au contact de l'extrémité externe de la paroi centrale 36 lorsque le capot est dans la position de verrouillage sur la base. La languette de verrouillage 96 présente notamment une section, dans un plan de coupe vertical et transversal, qui est similaire à celle de la paroi centrale. Cette languette de verrouillage a pour fonction d'une part d'assurer le blocage en position du capot 18 sur la base suivant la direction longitudinale L de l'adaptateur 6, et d'autre part de participer au maintien du bras dans le logement, en assurant une fonction de verrouillage secondaire sur le bras en position dans le logement, cette languette étant prévue pour se déformer latéralement au contact du bras lors de la fermeture du capot 18 et pour reprendre sa forme initiale de façon simultanée lors du verrouillage du capot sur la base avec les moyens de blocage en position 66.

Le capot 18 comprend par ailleurs au moins un rail d'appui 98, visible aux figures 7 et 8, qui s'étend longitudinalement dans l'espace interne 58 du capot 18, et de telle sorte à venir en recouvrement au moins en partie de l'un des logements 34a, 34b de la zone de réception 34 de la base 16 lorsque ledit capot 18 est dans sa position de verrouillage. Le rail d'appui 98 peut notamment s'étendre suivant la direction longitudinale L depuis la deuxième extrémité longitudinale 64 du capot 18 et longitudinalement de telle sorte à recouvrir l'intégralité de la paroi de support 38 du logement 34a, 34b jusqu'à l'évidement 46. Par ailleurs, tel que cela est visible à la [Fig.8], le rail d'appui 98 s'étend sensiblement parallèlement à la paroi de support 38 du logement et de telle sorte qu'il soit au moins en partie au contact de la paroi de maintien 40 dudit logement.

On assure ainsi un maintien optimal du bras lorsque celui-ci est disposé dans l'un des logements 34a, 34b, le rail d'appui 98 bloquant en position le bras dans l'un desdits logements 34a, 34b suivant la direction verticale V notamment. Selon l'exemple de l'invention, le capot 18 comprend deux rails d'appui 98, chacun étant destiné à recouvrir l'un des logements 34a, 34b de la zone de réception 34 de la base 16.

Selon une caractéristique de l'invention, le capot 18 comprend des moyens de reprise d'effort 102. Ainsi, selon l'exemple de l'invention visible à la [Fig.7], les moyens de reprise d'effort 102 comprennent au moins un bloc de renfort 104 qui fait saillie dans l'espace interne 58 du capot 18 et une pluralité de nervures de renfort latérales 106. De manière plus précise, le bloc de renfort 104 fait saillie dans l'espace interne 58 entre les ergots cylindriques 54 du moyen de rotation 48 et les nervures 84, de telle sorte à être disposé au contact d'une surface de reprise d'effort 108 formée sur la base 16 et visible à la [Fig.5], lorsque le capot est dans la position de verrouillage, le bloc de renfort 104 assurant en partie la reprise d'effort suivant la direction verticale V entre la base 16 et le capot 18 de l'adaptateur 6. Tel que cela est visible sur la [Fig.5], la surface de reprise d'effort 108 de la base 16 est formée sur la paroi supérieure 22 de la base 16 à l'opposé longitudinalement de la surface de réception 34.

Par ailleurs, les nervures de renfort latérales 106 s'étendent suivant la direction verticale V et sont disposées le long des faces internes 60 du capot 18, dans l'espace interne 58, et de telle sorte qu'elles soient en contact des faces externes de la première paroi latérale et de la deuxième paroi latérale de la base 16. On comprend que les nervures renfort latérales 106 assurent notamment une reprise d'effort entre le capot 18 et la base 16 suivant la direction transversale T de l'adaptateur 6.

Un deuxième mode de réalisation de l'invention va maintenant être décrit en rapport avec les figures 9 à 13. Il convient alors de considérer que seules les caractéristiques distinctes du premier mode réalisation vont être décrites et que pour les caractéristiques communes, il conviendra de se reporter à la description qui vient d'être faite en référence aux figures 1 à 8.

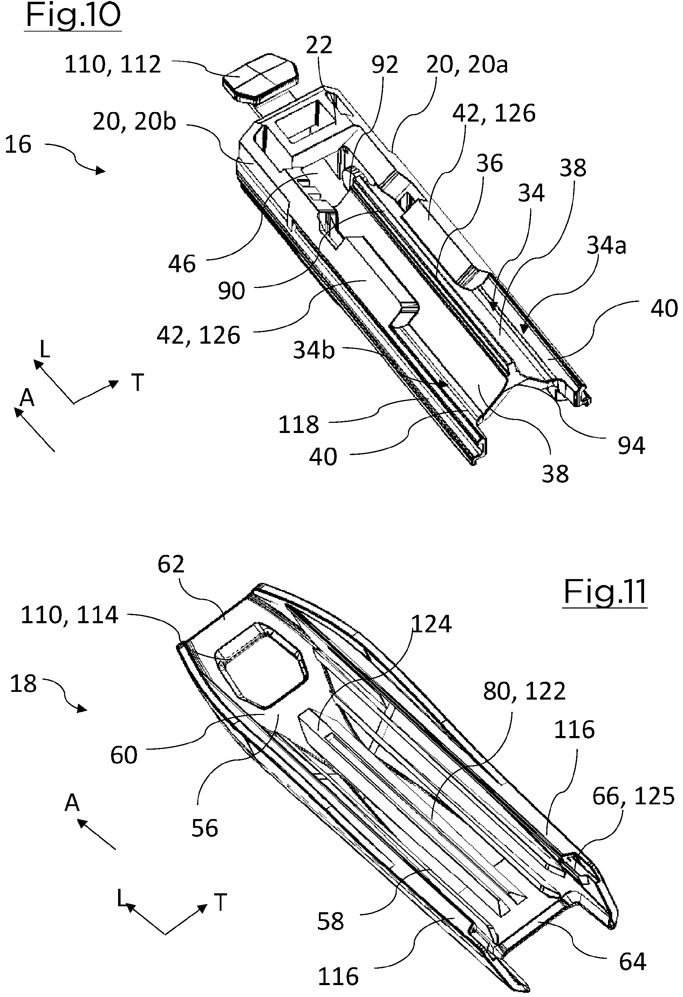

Dans ce deuxième mode de réalisation de l'invention, le capot 18 est mobile en translation longitudinale sur la base 16. Ainsi, l'adaptateur 6 comprend au moins un moyen d'arrêt 110 en position du capot 18 sur la base 16 dans sa position de verrouillage, le moyen d'arrêt 110 formant l'équivalent du moyen de blocage en position évoqué précédemment. Dans ce deuxième mode de réalisation, le moyen d'arrêt 110 en position consiste en une languette élastique 112 formée sur la base 16 et en une fenêtre de réception 114 formée sur le capot 18, la languette élastique 112 étant apte à coopérer avec la fenêtre de réception 114. De manière plus précise, la languette élastique 112, visible à la [Fig.10], est formée à l'opposé longitudinalement de la zone de réception 34 du bras.

Le capot 18 est configuré pour coulisser longitudinalement jusqu'à ce que ladite fenêtre de réception 114 coopère avec la languette élastique 112. A cet effet, la base de l'adaptateur est insérée dans le capot en introduisant l'extrémité longitudinale de la base portant la languette élastique 112 dans le capot au niveau de la deuxième extrémité longitudinale 64 de ce dernier, et la base et le capot sont déplacés longitudinalement l'un par rapport à l'autre le long de la direction longitudinale, jusqu'à ce que la languette élastique 112 débouche dans la fenêtre de réception 114. La languette élastique 112 est apte à se déformer puis à revenir dans sa position initiale, sans rupture de sa matière. On permet ainsi à la languette élastique 112 de se déformer afin de loger dans la fenêtre de réception 114 du capot 18 lors du coulissement de ce dernier le long de la base 16 puis de venir se verrouiller dans la fenêtre de réception 114.

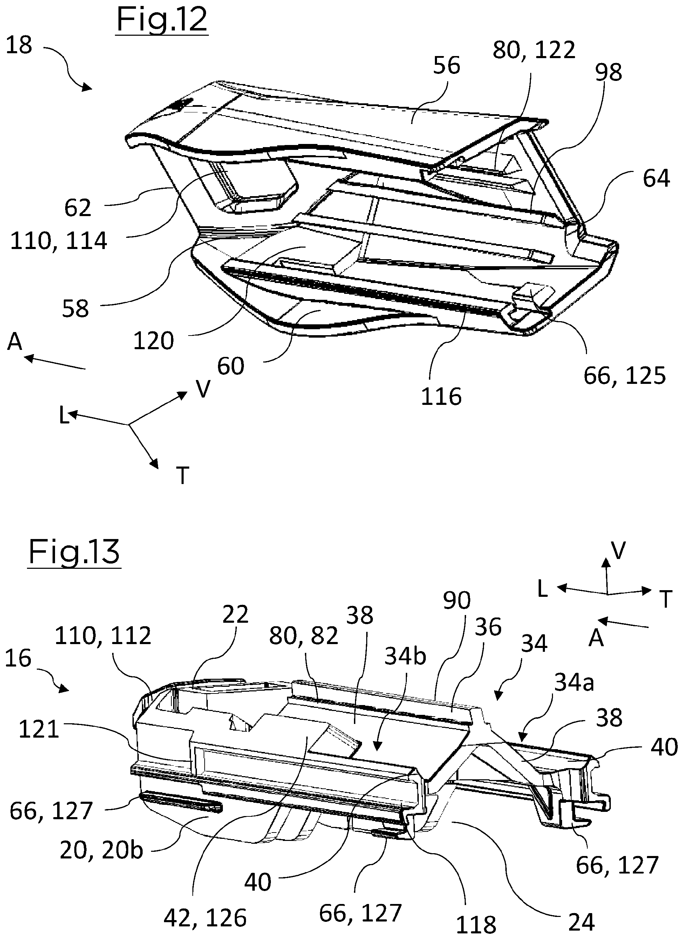

Afin de permettre le coulissement du capot 18 sur la base 16, le capot 18 comprend au moins un rail de guidage 116, particulièrement visible aux figures 11 et 12, qui s'étend sensiblement perpendiculairement aux parois latérales de la coque du capot, et longitudinalement en prenant naissance à la deuxième extrémité longitudinale 64 du capot 18. Ce rail de guidage 116 est configuré pour coopérer avec un rail complémentaire 118 formé le long de la base 16 et visible à la [Fig.13]. De manière plus précise, le rail complémentaire 118 s'étend longitudinalement le long de la face externe 52 d'au moins une des parois latérales 20 de la base 16. Par ailleurs, le rail de guidage 116 comprend au moins un organe de butée en translation 120 à son extrémité tournée vers la première extrémité longitudinale 62 du capot 18, apte à coopérer avec un épaulement 121 formé sur la base, notamment visible sur la [Fig.13], de telle sorte à bloquer la translation longitudinale du capot 18 sur la base 16 lorsque la languette élastique 112 est logée dans la fenêtre de réception 114.

Tel qu'illustré aux figures 11 et 12, l'adaptateur comprend par ailleurs des moyens de guidage additionnels, comprenant ici au moins un bloc de guidage 125 disposé au voisinage du rail de guidage 116 sur le capot 18 au niveau de la deuxième extrémité longitudinale 64, ce bloc de guidage étant apte à loger dans une portion du rail complémentaire 118. Le bloc de guidage 125 participe alors au blocage en position du capot 18 sur la base suivant la direction verticale V. Le bloc de guidage 125 qui coopère avec le rail complémentaire 118 apporte par ailleurs une fonction de butée en translation longitudinale au capot 18, la coopération du bloc de guidage avec l'épaulement 121 formé sur la base servant à bloquer la translation longitudinale d'ouverture du capot 18 suivant la direction L. La base de l'adaptateur comprend par ailleurs au moins une paroi de maintien 127, visible à la [Fig.13], qui s'étend longitudinalement le long de la face externe 52 d'une des parois latérales 20, la paroi de maintien 127 assurant notamment le blocage en position du rail de guidage 116 dans le rail complémentaire 118 suivant la direction verticale V. Selon l'exemple de l'invention chacune des parois latérales 20 de la base 16 comprend deux parois de maintien 127 disposées sur leurs faces externes 52 et à l'opposées l'une de l'autre suivant la direction longitudinale L.

Dans ce deuxième mode de réalisation de l'invention et tel que visible à la [Fig.11], les moyens de coopération 80 de la base 16 avec le capot 18 comprennent au moins une glissière 122 formée dans l'espace interne 58 du capot 18 et apte à coopérer avec la paroi centrale 36 de la base 16, de manière équivalente à ce qui a été décrit dans le premier mode de réalisation pour la rainure. Là encore, la glissière 122 est apte à coopérer avec l'arête longitudinale 90 de la paroi centrale 36. En d'autres termes, lors de la translation longitudinale du capot 18 sur la base 16, la glissière 122 est apte à coulisser le long de l'arête longitudinale 90 de la paroi centrale 36 de la base 16. A cet effet, la glissière 122 est ouverte à une extrémité longitudinale pour permettre l'insertion de l'arête longitudinale, et elle présente à l'extrémité longitudinale opposée un organe de butée 124 de la paroi centrale 36 dans la glissière 122, de manière à bloquer la translation longitudinale de la glissière 122 le long de la paroi centrale 36, notamment lorsque le capot 18 est dans sa position de verrouillage.

Par ailleurs, et tel que cela est visible à la [Fig.10], l'organe de positionnement 42 de la paroi de maintien 40 de chacun des logements 34a, 34b est ici un bloc 126 en saillie de la paroi de maintien 40 de chacun des logements 34a, 34b. On comprend alors que dans un tel exemple de l'invention, l'organe de positionnement 42 est apte à coopérer avec une gorge formée sur le bras, non visible.

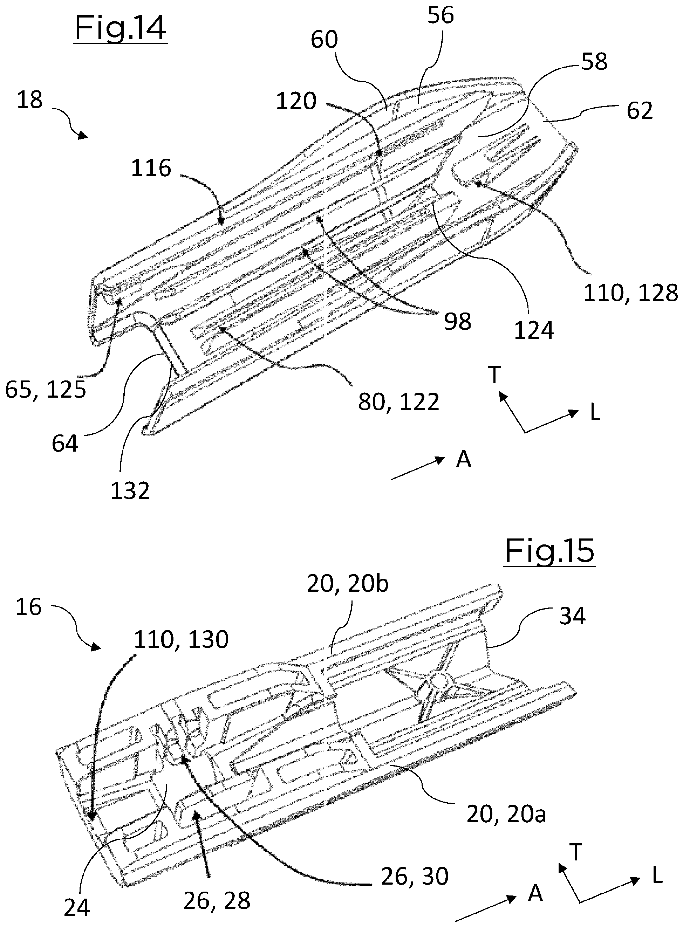

Un troisième mode de réalisation de l'invention va maintenant être décrit en rapport avec les figures 14 et 15. Il convient alors de considérer que seules les caractéristiques distinctes du premier mode de réalisation et du deuxième mode de réalisation vont être décrites, et que pour les caractéristiques communes il conviendra de se référer aux descriptions faites en référence aux figures 1 à 13.

Ce troisième mode de réalisation de l'invention diffère de ce qui a été précédemment décrit en ce que le moyen d'arrêt 110 consiste en au moins une languette de maintien 128 longitudinale formée sur le capot 18 à l'opposé d'une ouverture longitudinale 132 du capot, formée à la deuxième extrémité longitudinale 64, et apte à coopérer avec une traverse longitudinale 130 formée sur la base 16 du capot à l'opposé de la zone de réception 34. On comprend notamment que la traverse longitudinale 130 forme un logement de réception de la languette de maintien 128 assurant le blocage en translation longitudinale en fin de translation, une fois que la languette de maintien 128 est passée au-delà de ladite traverse longitudinale 130.

## Revendications

1. Adaptateur (6) pour la fixation d'un balai d'essuyage (2) à un bras (4) d'un système d'essuyage (1), l'adaptateur (6) s'étendant selon une direction d'allongement principal (A) longitudinale (L) et étant configuré pour être monté sur un connecteur (8) du balai d'essuyage (2), l'adaptateur (6) comprenant au moins une base (16) et un capot (18), la base (16) comprenant au moins deux parois latérales (20, 20a, 20b) opposées l'une de l'autre selon une direction transversale (T) de l'adaptateur (6) perpendiculaire à la direction longitudinale (L), les parois latérales (20, 20a, 20b) étant reliées l'une à l'autre par une paroi supérieure (22), de telle sorte que lesdites parois latérales (20, 20a, 20b) et la paroi supérieure (22) forment un corps (23) de la base (16) qui délimite en partie un espace de réception (24) pour le connecteur (8), la base (16) étant configurée pour être montée pivotante autour d'un axe de rotation (R1) sur le connecteur (8), ladite base (16) comprenant une zone de réception (34) du bras (4) du système d'essuyage (1) dans laquelle est formé au moins un logement (34a, 34b) délimité transversalement par une paroi de support (38) et une paroi de maintien (40), la paroi de support (38) et la paroi de maintien (40) se rejoignant de telle sorte à former un logement (34a, 34b), le capot (18) étant mobile sur la base (16) entre une position de dégagement dans laquelle l'accès à la zone de réception (34) est dégagé et une position de verrouillage dans laquelle le capot (18) recouvre la zone de réception (34) du bras (4), **caractérisé en ce que** le logement (34a, 34b) présente une section, dans un plan transversal perpendiculaire à la direction longitudinale, en forme de V.

2. Adaptateur (6) selon la revendication précédente, dans lequel la zone de réception (34) du bras (4) du système d'essuyage (1) et l'espace de réception (24) du connecteur (8) sont disposés de part et d'autre de la paroi supérieure (22) de la base (16).

3. Adaptateur (6) selon l'une quelconque des revendications précédentes, dans lequel la paroi de maintien (40) de l'au moins un logement (34a, 34b) comprend un organe de positionnement (42) configuré pour coopérer avec un élément de positionnement correspondant du bras (4) du système d'essuyage (1).

4. Adaptateur (6) selon l'une quelconque des revendications précédentes, dans lequel la paroi de support (38) de l'au moins un logement (34a, 34b) comprend un évidement (46), ouvert sur l'espace de réception (24) du connecteur (8).

5. Adaptateur (6) selon l'une quelconque des revendications précédentes, dans lequel la zone de réception (34) comprend deux logements (34a, 34b) séparés l'un de l'autre par une paroi centrale (36) qui s'étend principalement suivant la direction longitudinale (L), chacun des logements (34a, 34b) étant configurés pour recevoir le bras (4) du système d'essuyage (1), lesdits logements (34a, 34b) étant symétriques le long d'un plan principal (L, V) de la paroi centrale (36), chaque logement (34a, 34b) comportant une paroi de support (38) et une paroi de maintien (40) s'étendant respectivement depuis la paroi centrale (36) et l'une des parois latérales (20, 20a, 20b) de la base (16).

6. Adaptateur (6) selon l'une quelconque des revendications précédentes, dans lequel l'adaptateur (6) comporte des moyens de coopération (80) de la base (16) avec le capot (18).

7. Adaptateur (6) selon l'une quelconque des revendications précédentes, dans lequel le capot (18) comprend au moins un rail d'appui (98) qui s'étend longitudinalement et qui est configuré pour venir en recouvrement de l'au moins un logement (34a, 34b) de la zone de réception (34).

8. Adaptateur (6) selon l'une quelconque des revendications précédentes, dans lequel le capot (18) est monté rotatif sur la base (16) au moyen d'un dispositif de rotation (48) de l'adaptateur (6) formé sur la base (16) et le capot (18).

9. Adaptateur (6) selon l'une quelconque des revendications précédentes, dans lequel le capot (18) est configuré pour être mobile en translation longitudinale sur la base (16).

10. Balai d'essuyage (2) comprenant au moins une lame (10) d'essuyage, un connecteur (8) et un adaptateur (6) selon l'une quelconque des revendications précédentes, l'adaptateur (6) étant monté pivotant par rapport au connecteur (8) rendu solidaire d'un support de la lame d'essuyage.

11. Système d'essuyage (1) pour véhicule automobile, qui comprend un balai d'essuyage (2) selon la revendication précédente et un bras (4) relié au balai d'essuyage (2) par l'intermédiaire de l'adaptateur, ledit bras étant disposé dans la zone de réception (34) de l'adaptateur (6).

## Patentansprüche

1. Adapter (6) zur Befestigung eines Wischerblatts (2) an einem Arm (4) eines Wischersystems (1), wobei sich der Adapter (6) entlang einer longitudinalen Haupterstreckungsrichtung (A) (L) erstreckt und konfiguriert ist, um auf einem Verbinder (8) des Wischerblatts (2) montiert zu werden, wobei der Adapter (6) mindestens eine Basis (16) und eine Abdeckung (18) umfasst, wobei die Basis (16) mindestens zwei Seitenwände (20, 20a, 20b) umfasst, die einander in einer Querrichtung (T) des Adapters (6) senkrecht zur Längsrichtung (L) gegenüberliegen, wobei die Seitenwände (20, 20a, 20b) durch eine obere Wand (22) miteinander verbunden sind, sodass die genannten Seitenwände (20, 20a, 20b) und die obere Wand (22) einen Körper (23) der Basis (16) bilden, der teilweise einen Aufnahmeraum (24) für den Verbinder (8) begrenzt, wobei die Basis (16) konfiguriert ist, um schwenkbar um eine Drehachse (R1) auf dem Verbinder (8) montiert zu werden, wobei die Basis (16) einen Aufnahmebereich (34) für den Arm (4) des Wischersystems (1) umfasst, in dem mindestens eine Aufnahme (34a, 34b) ausgebildet ist, die quer durch eine Stützwand (38) und eine Haltewand (40) begrenzt wird, wobei die Stützwand (38) und die Haltewand (40) so zusammenlaufen, dass sie eine Aufnahme (34a, 34b) bilden, wobei die Abdeckung (18) auf der Basis (16) zwischen einer Freigabeposition, in der der Zugang zum Aufnahmebereich (34) freigegeben ist, und einer Verriegelungsposition, in der die Abdeckung (18) den Aufnahmebereich (34) des Arms (4) abdeckt, beweglich ist, **dadurch gekennzeichnet, dass** die Aufnahme (34a, 34b) einen Querschnitt in einer Querebene senkrecht zur Längsrichtung in Form eines V aufweist.

2. Adapter (6) nach dem vorhergehenden Anspruch, bei dem der Aufnahmebereich (34) des Arms (4) des Wischersystems (1) und der Aufnahmeraum (24) des Verbinders (8) auf beiden Seiten der oberen Wand (22) der Basis (16) angeordnet sind.

3. Adapter (6) nach einem der vorhergehenden Ansprüche, bei dem die Haltewand (40) der mindestens einen Aufnahme (34a, 34b) ein Positionierungsorgan (42) umfasst, das konfiguriert ist, um mit einem entsprechenden Positionierungselement des Arms (4) des Wischersystems (1) zusammenzuwirken.

4. Adapter (6) nach einem der vorhergehenden Ansprüche, bei dem die Stützwand (38) der mindestens einen Aufnahme (34a, 34b) eine Aussparung (46) umfasst, die zum Aufnahmeraum (24) des Verbinders (8) hin offen ist.

5. Adapter (6) nach einem der vorhergehenden Ansprüche, bei dem der Aufnahmebereich (34) zwei Aufnahmen (34a, 34b) umfasst, die durch eine Mittelwand (36) voneinander getrennt sind, die sich hauptsächlich in Längsrichtung (L) erstreckt, wobei jede der Aufnahmen (34a, 34b) konfiguriert ist, um den Arm (4) des Wischersystems (1) aufzunehmen, wobei die genannten Aufnahmen (34a, 34b) entlang einer Hauptebene (L, V) der Mittelwand (36) symmetrisch sind, wobei jede Aufnahme (34a, 34b) eine Stützwand (38) und eine Haltewand (40) aufweist, die sich jeweils von der Mittelwand (36) und einer der Seitenwände (20, 20a, 20b) der Basis (16) erstrecken.

6. Adapter (6) nach einem der vorhergehenden Ansprüche, bei dem der Adapter (6) Kooperationsmittel (80) der Basis (16) mit der Abdeckung (18) aufweist.

7. Adapter (6) nach einem der vorhergehenden Ansprüche, bei dem die Abdeckung (18) mindestens eine Stützschiene (98) umfasst, die sich in Längsrichtung erstreckt und konfiguriert ist, um die mindestens eine Aufnahme (34a, 34b) des Aufnahmebereichs (34) zu überdecken.

8. Adapter (6) nach einem der vorhergehenden Ansprüche, bei dem die Abdeckung (18) mittels einer Drehvorrichtung (48) des Adapters (6), die an der Basis (16) und der Abdeckung (18) ausgebildet ist, drehbar auf der Basis (16) montiert ist.

9. Adapter (6) nach einem der vorhergehenden Ansprüche, bei dem die Abdeckung (18) konfiguriert ist, um in Längsrichtung auf der Basis (16) verschiebbar zu sein.

10. Wischerblatt (2), umfassend mindestens eine Wischerlippe (10), einen Verbinder (8) und einen Adapter (6) nach einem der vorhergehenden Ansprüche, wobei der Adapter (6) schwenkbar in Bezug auf den Verbinder (8) montiert ist, der mit einem Träger der Wischerlippe fest verbunden ist.

11. Wischersystem (1) für ein Kraftfahrzeug, das ein Wischerblatt (2) nach dem vorhergehenden Anspruch und einen Arm (4) umfasst, der mit dem Wischerblatt (2) über den Adapter verbunden ist, wobei der Arm im Aufnahmebereich (34) des Adapters (6) angeordnet ist.

## Claims

1. An adapter (6) for attaching a wiper blade (2) to an arm (4) of a wiping system (1), the adapter (6) extending in a longitudinal (L) main direction of extension (A) and being configured to be mounted on a connector (8) of the wiper blade (2), the adapter (6) comprising at least a base (16) and a cover (18), the base (16) comprising at least two side walls (20, 20a, 20b) opposite one another in a transverse direction (T) of the adapter (6) perpendicular to the longitudinal direction (L), the side walls (20, 20a, 20b) being connected to one another by an upper wall (22), such that said side walls (20, 20a, 20b) and the upper wall (22) form a body (23) of the base (16) which partially delimits a receiving space (24) for the connector (8), the base (16) being configured to be pivotably mounted about an axis of rotation (R1) on the connector (8), the said base (16) comprising a receiving area (34) for the arm (4) of the wiping system (1) in which is formed at least one housing (34a, 34b) delimited transversely by a support wall (38) and a retention wall (40), the support wall (38) and the retention wall (40) meeting in such a way as to form a housing (34a, 34b), the cover (18) being movable on the base (16) between a release position in which access to the receiving area (34) is clear and a locking position in which the cover (18) covers the receiving area (34) for the arm (4), **characterized in that** the housing (34a, 34b) has a V-shaped section, in a transverse plane perpendicular to the longitudinal direction.

2. The adapter (6) as claimed in the preceding claim, wherein the receiving area (34) for the arm (4) of the wiping system (1) and the receiving space (24) for the connector (8) are arranged on either side of the upper wall (22) of the base (16).

3. The adapter (6) as claimed in any one of the preceding claims, wherein the retention wall (40) of the at least one housing (34a, 34b) comprises a positioning member (42) configured to interact with a corresponding positioning element of the arm (4) of the wiping system (1).

4. The adapter (6) as claimed in any one of the preceding claims, wherein the support wall (38) of the at least one housing (34a, 34b) comprises a recess (46), open to the receiving space (24) for the connector (8).

5. The adapter (6) as claimed in any one of the preceding claims, wherein the receiving area (34) comprises two housings (34a, 34b) separated from one another by a central wall (36) which extends mainly in the longitudinal direction (L), each of the housings (34a, 34b) being configured to receive the arm (4) of the wiping system (1), said housings (34a, 34b) being symmetrical about a main plane (L, V) of the central wall (36), each housing (34a, 34b) comprising a support wall (38) and a retention wall (40) extending from the central wall (36) and one of the side walls (20, 20a, 20b) of the base (16), respectively.

6. The adapter (6) as claimed in any one of the preceding claims, wherein the adapter (6) comprises interaction means (80) for interaction between the base (16) and the cover (18).

7. The adapter (6) as claimed in any one of the preceding claims, wherein the cover (18) comprises at least one support rail (98) which extends longitudinally and which is configured to cover the at least one housing (34a, 34b) of the receiving area (34).

8. The adapter (6) as claimed in any one of the preceding claims, wherein the cover (18) is rotatably mounted on the base (16) by means of a rotation device (48) of the adapter (6) formed on the base (16) and the cover (18).

9. The adapter (6) as claimed in any one of the preceding claims, wherein the cover (18) is configured to be movable in longitudinal translation on the base (16).

10. A wiper blade (2) comprising at least one wiper strip (10), a connector (8) and an adapter (6) as claimed in any one of the preceding claims, the adapter (6) being pivotably mounted relative to the connector (8) rigidly secured to a holder for the wiper strip.

11. A wiping system (1) for a motor vehicle, which comprises a wiper blade (2) as claimed in the preceding claim, and an arm (4) which is connected to the wiper blade (2) by means of the adapter, said arm being arranged in the receiving area (34) of the adapter (6).
